# EUROPÄISCHE PATENTSCHRIFT

(11) **EP 3 418 125 B1**
(45) Veröffentlichungstag und Bekanntmachung des Hinweises auf die Patenterteilung: **11.03.2020**
(21) Anmeldenummer: 18178106.3
(22) Anmeldetag: 15.06.2018
(51) Int. Cl.: B60N 3/00, B60N 3/10, B60P 3/36, B60N 2/14, B60N 3/16, B60R 15/00

(54) **WOHNMOBIL**
MOBILE HOME
CAMPING-CAR

(30) Priorität: 20.06.2017 DE 102017113587
(43) Veröffentlichungstag der Anmeldung: 26.12.2018
(73) Patentinhaber: Camposito GmbH & Co. KG, 92265 Edelsfeld (DE)
(72) Erfinder: Hartmann, Hans, 92265 Edelsfeld (DE)
(74) Vertreter: Schön, Christoph

(56) Entgegenhaltungen:
- EP-A1- 3 156 282
- DE-A1-102005 021 702
- DE-U1- 9 104 522
- DE-U1-202017 000 823
- US-A- 5 697 666

## Beschreibung

Die vorliegende Erfindung betrifft ein Wohnmobil.

Insbesondere kleinere Wohnmobile sind beliebt, da sie nicht nur im Kauf kostengünstiger als große Fahrzeuge sind, sondern da es bei kleineren Fahrzeugen auch gut möglich ist, sie nicht nur zur Ferienzeit, sondern ganzjährig zu nutzen, da zum einen der Kraftstoffverbrauch akzeptabel ist und zum anderen die Manövrierbarkeit besser ist. Gerade bei dieser Fahrzeuggröße stellt sich verstärkt die Aufgabe der optimalen Platznutzung. Konkret stellt sich die Aufgabe der verbesserten Platznutzung bei einem Fahrzeug mit zumindest zwei Liegeplätzen, einer Nasszelle und einem Sitzbereich mit vier Sitzgelegenheiten und einem Tisch, da erkannt wurde, dass gerade dies eine Ausstattung ist, die von vielen Nutzern auch bei kleinen Fahrzeugen als notwendig angesehen wird.

Aus DE 20 2015 100 259 U1 ist bekannt, dass eine Toilette zwischen einer Benutzungsstellung und einer Parkstellung, bei der sie nicht benutzbar ist, verfahren werden kann. Vergleichbares ist aus DE 20 2009 004 485 U1 bekannt. DE 76 01 151.3 lehrt, dass ein Wohnwagen in seine beiden Seitenrichtungen verbreiterbar sein kann und aus DE 10 2015 117 421 A1 ist ein Wohnmobil mit einer in der Längsrichtung verfahrbaren Toilette bekannt.

DE9104522.3U1 offenbart ein Wohnmobil gemäß dem Oberbegriff des Patentanspruchs 1.

Die vorstehend genannte Aufgabe wird mit den Merkmalen der unabhängigen Ansprüche gelöst. Bevorzugte Weiterbildungen sind Gegenstand der abhängigen Ansprüche.

Ein Wohnmobil kann eine im Fahrzeuginneren angeordnete Nasszelle aufweise, die eine Toilette umfasst. Ein Zugang ist in Fahrzeugbreitenrichtung vorgesehen. Der Zugang der Nasszelle umfasst eine Schließvorrichtung, wie eine Tür und/oder eine spannbare Plane und/oder eine Schiebetür und ist in Fahrzeugbreitenrichtung in zwei geschlossene Stellungen bringbar. Dabei weist die Nasszelle bei den beiden geschlossenen Stellungen eine unterschiedliche Größe auf. Hieraus ergibt sich insbesondere, dass die veränderliche Größe durch eine Vergrößerung in Fahrzeugbreitenrichtung durchgeführt wird. Die Nasszelle, die eine Toilette umfasst, ist ausschließlich in der Fahrzeuglängsrichtung verfahrbar. Darüber hinaus ist keine Beweglichkeit für die Toilette vorgesehen. Dies bedeutet, dass eine relativ einfache Führung für die Nasszelle, nämlich eine ausschließlich linear führende Führung verwendet werden kann. Eine Planen- oder Lammellentür ist als Schließvorrichtung geeignet. Der Platz ist im Fahrzeug sehr eng bemessen. Und um genügend Platz für eine Sitzecke, bzw. einen Sitzbereich zu haben, muss die Toilette im Fall, dass sie nicht benutzt wird, möglichst klein sein. Und um die notwendige Größe für die Toilette bei ihrer Verwendung zu haben, kommt die genannte Vergrößerung in Fahrzeugbreitenrichtung zum Einsatz.

Konkret kann dies so gestaltet werden, dass in der ersten geschlossenen Stellung der Zugang zu der Nasszelle plan geschlossen ist. Ein planer Verschluss kann bspw. durch eine Tür oder eine Planentür, Lamellentür oder dergleichen realisiert werden. Ein Vorhang eignet sich dafür weniger, da er vom Design weniger ansprechend ist. In der zweiten geschlossenen Stellung ist ein Teil der Nasszelle zumindest teilweise in das Fahrzeuginnere also in Fahrzeugbreitenrichtung verlagert, so dass das Innenvolumen der Nasszelle dadurch vergrößert wird.

Vorteilhaft ist ferner, wenn die Nasszelle in Fahrzeuglängsrichtung in zwei Positionen verschiebbar ist. Insbesondere ergibt sich daraus, dass in der ersten Position ein im Fahrzeugfond angeordneter Schlafbereich vergrößerbar ist und in der zweiten Position der Schlafbereich verkleinerbar ist und statt dessen ein Wohnbereich vergrößerbar ist. So ist der Platz optimal nutzbar.

Insbesondere ist die Toilettensitzrichtung in Fahrzeuglängsrichtung und/oder in der ersten geschlossenen Stellung beträgt der Abstand von der Toilettenbrille zu der Schließvorrichtung weniger als 15 cm, bevorzugt weniger als 3 cm und besonders bevorzugt ist die Schließvorrichtung unmittelbar der Toilettenbrille benachbart. So wird im Zustand der Nichtverwendung der Toilette der Platzbedarf maximal reduziert. Da bevorzugt ein standardmäßig verfügbares Toilettenmodul verwendet wird, welches kombiniert mit einem Fäkaltank eine Einheit bildet, ist die Größe des Toilettenmoduls vorgegeben und unveränderlich. Die Toilette wird üblicherweise als eine Not-Toilette verwendet, da an vielen Orten, wie z.B. Campingplätzen lokale, stationäre Toiletten vorhanden sind und die von den Wohnmobilbewohnern bevorzugt werden. Aus diesem Grund ist akzeptabel, dass die Nutzung der Toilette nicht mit dem maximalen Komfort möglich ist. Dies gilt auch für den nachfolgend erläuterten Tisch, der ggf. für die Nutzung der Toilette verschoben werden muss.

Insbesondere ist das Wohnmobil in eine Anordnung mit vergrößertem Wohnbereich bringbar, die zumindest vier Sitzplätze und einen Tisch umfasst. Der Tisch ist in eine Lage bringbar, in welcher er von allen der vier Sitzplätze optimal erreichbar ist. Ggf. kann der Tisch so angeordnet sein, dass die Nasszelle nicht zugänglich ist, wenn der Tisch in der genannten Position ist.

Bevorzugt ist ferner, wenn unter dem Tisch eine oder mehrere Kochvorrichtungen angebracht sind, wobei die eine oder mehreren Kochvorrichtungen relativ zur Tischplatte bewegbar, beispielsweise schwenkbar und/oder herausziehbar, sind. Die Lage der Kochvorrichtungen unterhalb des Tischs mag für einen Fachmann sowohl aus ergonomischen wie auch aus physikalischen Gründen nachteilig erscheinen, wenn beispielsweise eine Person, die sich im Wohnmobil befindet, sich unter die Tischplatte bzw. -oberfläche bücken muss, um so die Kochvorrichtungen zu erreichen. Bevorzugt ist jedoch beispielsweise der Tisch bewegbar und so beispielsweise in den Eingangsbereich des Fahrzeugs bringbar. So kann eine Person, die sich außerhalb des Fahrzeugs befindet, die Kochvorrichtung(en) nach Verschieben des Tisches gut erreichen. Wenn die Kochvorrichtung(en), wie z.B. eine Kochfläche lateral gegenüber dem Tisch verschiebbar ist, so ist es dann möglich, die Kochvorrichtung(en) durch die Türöffnung nach außen aus dem Fahrzeug heraus zu bewegen. So kann man mit der Kochvorrichtung sowohl innerhalb wie auch außerhalb des Fahrzeugs kochen. Der Kochbetrieb außerhalb des Fahrzeugs hat beispielsweise den Vorteil, dass keine Kochdünste in dem Fahrzeug entstehen.

Vorteilhaft ist ferner, wenn in einer Anordnung mit vergrößertem Wohnbereich ein Tisch in Fahrzeugbreitenrichtung neben der Nasszelle angeordnet ist oder anordbar ist und zu beiden Seiten des Tisches in Fahrzeuglängsrichtung jeweils zumindest zwei Sitzgelegenheiten angeordnet sind. Es kann insbesondere in der Anordnung mit vergrößertem Wohnbereich der Tisch entweder spaltfrei an die Nasszelle angrenzen oder ein zwischen der Nasszelle und dem Tisch vorhandener Spalt kleiner sein als ein Spalt zwischen einer davon gegenüberliegenden Seite des Tischs bis zu der Innenwand des Wohnmobils, die der Nasszelle gegenüberliegt. So können sämtliche Personen den Sitzbereich einfach betreten und verlassen.

Bevorzugt ist in der ersten geschlossenen Stellung der Nasszelle wie auch der zweiten geschlossenen Stellung die Schließvorrichtung so eingerichtet, dass an der Innenseite der Schließvorrichtung abtropfendes Duschwasser in einen Auffangbereich der Nasszelle gelangt. Dies kann so geschehen, dass bspw. eine Planentür nur lokal, also in einem vertikal höheren Bereich nach außen erweiterbar ist. Im ihrem unteren Bereich, also wo ein Überhang von der Planentür in das Innere einer Kunststoffwanne, die das Innere der Nasszelle definiert, findet ggf. auch bei der zweiten geschlossenen Position keine Ausformung nach außen statt.

Insbesondere kann die Schließvorrichtung eine blick- und wassergeschützte Folie oder ein Textil aufweisen, die von einer federelastisch spannbaren Wickelvorrichtung aufwickelbar ist. Dies ist eine Konstruktion nach dem Rollo-Prinzip. Bevorzugt ist die Achse der Wickelvorrichtung vertikal, da sie so einfach bedienbar ist. Die Mitte der Wickelvorrichtung ist nämlich nahe zu der Mitte der Körperhöhe. Die Schließvorrichtung muss nicht die gesamte (Tür-)Öffnung der Nasszelle verschließen. Es reicht vielmehr aus, wenn in einem Bereich von ca. 20 cm oberhalb des Bodens bis 1,3 m Höhe der Blick in das Innere verwehrt ist. Bei anderen Ausführungsformen kann es bis eine Höhe von 1.6 m reichen.

In einem Verfahren zur Veränderung eines Wohnmobils von einer Schlafanordnung in eine Anordnung mit vergrößertem Wohnbereich wird ein Teil der Fläche, die bei der Schlafanordnung für eine Matratze verwendet wird, in der Sitzgruppenanordnung durch zumindest einen Sitz belegt. Für den genannten Umbau wird eine eine Toilette umfassende Nasszelle entlang der Längsrichtung des Wohnmobils in Richtung des Fahrzeugfonds verschoben. Insbesondere oder bevorzugt wird ein Tisch in der Sitzgruppenanordnung in Fahrzeugquerrichtung neben der Nasszelle so angeordnet, dass ein Abstand von mindestens 25 cm vom Tisch zu der der Nasszelle gegenüber liegenden Innenwand des Wohnmobils oder einer Tür des Wohnmobils entsteht. Die Matratze selbst dient bevorzugt nicht als Sitz, sondern als Sitz ist ein gesondertes, bevorzugt gepolstertes Möbel vorgesehen. Die Außenbreite des Fahrzeugs beträgt bevorzugt ohne Berücksichtigung von Anbauteilen wie Außenspiegeln weniger als 200 cm.

Die erfinderische Aufgabe wird unabhängig von den vorstehend aufgeführten Merkmalen auch durch folgende Merkmale gelöst: Ein Wohnmobil kann dabei einen Innenraum aufweisen und einen Tisch, der ein Tischbein umfasst. Bevorzugt wird exakt nur ein Tischbein verwendet. Eine Arbeitsfläche des Tischs ist um die Längsachse des Tischbeins schwenkbar und der Tisch umfasst eine erste Linearlagerung, mit der die Arbeitsfläche des Tischs relativ zu dem Tischbein verschiebbar ist.

Insbesondere kann das Tischbein dauerhaft so mit dem Boden des Wohnmobils verbunden sein, dass es bei der normalen oder bestimmungsgemäßen Verwendung des Wohnmobils nicht lösbar ist. Vorteilhaft ist, wenn der Tisch eine zweite Linearlagerung umfasst, über die die Arbeitsfläche in einer Richtung verschiebbar ist, die sich von der Richtung der ersten Linearlagerung unterscheidet und insbesondere senkrecht dazu ist. Ferner kann in einigen Ausführungsformen der Erfindung unter dem Tisch eine Thermobox so angeordnet sein, dass ihre Gewichtskräfte komplett über das Tischbein abgeleitet werden. Insbesondere kann die Thermobox um die Längsachse des Tischbeins schwenkbar sein. Vorteilhaft ist, wenn die Lagerung der Thermobox relativ zu dem Tischbein so ausgestaltet ist, dass ein Anschlag vorgesehen ist, durch den eine Rotation von mehr als 360° nicht möglich ist. Insbesondere kann an der Unterseite der Tischplatte eine dritte Linearführung vorgesehen sein, mit der die Thermobox relativ zur Arbeitsfläche verschiebbar ist.

Nachfolgend werden bevorzugte Ausführungsformen anhand von Figuren beschrieben. Es zeigen:
- Fig. 1: eine Draufsicht auf das Innere eines Wohnmobils in der Sitzgruppenanordnung,
- Fig. 2: eine Draufsicht auf das Innere des Wohnmobils in der Schlafanordnung,
- Fig. 3: eine Detailansicht einer Nasszelle des Wohnmobils in einer ersten alternativen Ausführungsform,
- Fig. 4: eine Detailansicht einer Nasszelle des Wohnmobils in einer zweiten alternativen Ausführungsform,
- Fig. 5 bis 7: zeigen unterschiedliche Anordnungen eines Tischs innerhalb des Wohnmobils,
- Fig. 8: eine Draufsicht auf die Oberseite des Tischs und
- Fig. 9 und 10: zeigen jeweils Seitenansichten des Tischs in unterschiedlichen Ausführungsformen.

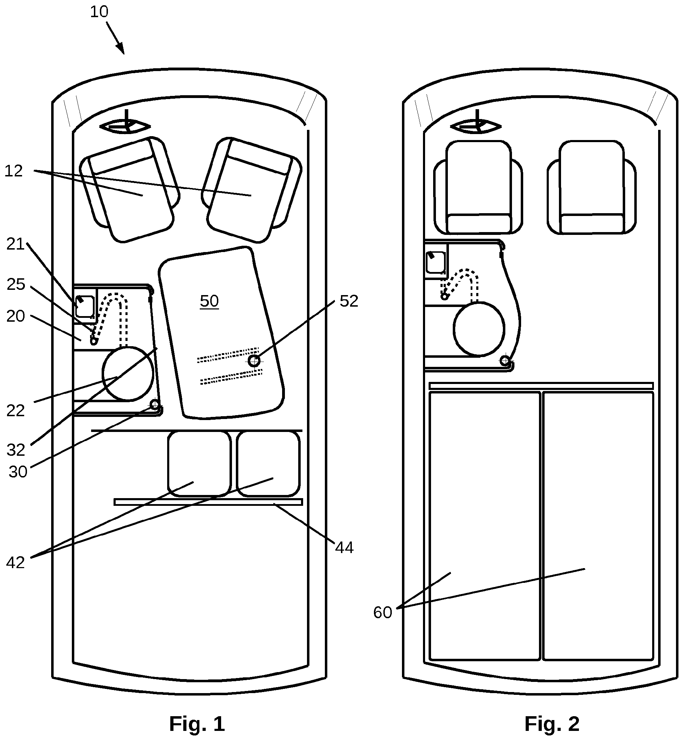

Figur 1 zeigt eine Draufsicht auf ein erfindungsgemäßes Wohnmobil 10. Die Breite beträgt bevorzugt 190 cm. Bevorzugt werden hier Fahrzeuge mit einer Gesamtbreite von weniger als 210 cm und insbesondere von weniger als 200 cm betrachtet. Die Länge des Fahrzeugs ist bspw. 530 cm. Somit wird hier ein Fahrzeug mit einer Länge betrachtet, bei der es nicht möglich ist, gleichzeitig eine Liegezone mit einer Liegerichtung in Fahrzeuglängsrichtung, eine Toilette bzw. Nasszelle und einen Wohnbereich einzurichten. Es kann sich bei dem Fahrzeug um einen VW-Camper der T6 Reihe handeln. Diese Fahrzeuge sind als eine Übergangsgröße zu verstehen, so dass sie sowohl während der Urlaubszeit als Campingmobil nutzbar sind, wie auch als Alltagsfahrzeug für den Rest des Jahres. Größere Fahrzeuge sind unhandlich und eignen sich nicht so gut für den alltäglichen Straßenverkehr. Außerdem haben größere Fahrzeuge einen entsprechend höheren Treibstoffverbrauch.

Fig. 1 zeigt das Wohnmobil 10 in einer Anordnung mit vergrößertem Wohnbereich. Der Fahrersitz 12 und der Beifahrersitz 12 sind dabei jeweils fast um 180° gedreht, so dass die Sitzrichtung zum Fahrzeuginneren bzw. zur Fahrzeugmitte weist. Relativ zentral im Fahrzeuginneren ist ein Tisch 50 angeordnet, der aber mindestens ein Tischbein 52 mit dem Boden des Fahrzeugs verbunden ist. Diese Verbindung kann eine lösbare Spannung, Klemmung oder Rastung umfassen. Der Tisch ist von Personen, die auf dem Fahrer- bzw. Beifahrersitz 12 sitzen, gut erreichbar. Auf der gegenüberliegenden Seite des Tischs sind zwei weitere Sitze 42 angeordnet. Bei der vorliegenden Fahrzeuggröße ist eine optimale Belegung des Fahrzeugs mit zwei Personen vorgesehen, für die im Fond des Fahrzeugs ein Schlafbereich 60 vorgesehen ist. Allerdings wird es von den Nutzern des Fahrzeugs gewünscht, auch Gäste bewirten zu können. Dabei wird eine Anzahl von max. zwei Gästen als ausreichend angesehen. Somit wird gefordert, dass zeitgleich vier Personen um den Tisch sitzen können, wie es mit den zwei weiteren Sitzen 42 im hinteren Bereich des Fahrzeugs realisiert wird. Schlafplätze für die zwei weiteren Personen müssen nicht zwingend im Fahrzeug vorgesehen sein. Es kann aber ein anhebbares Dach zum Einsatz kommen, unter dem zwei Zusatzschlafplätze vorgesehen sein können. Alternativ kann vorgesehen sein, dass die weiteren Personen neben dem Fahrzeug zelten. So kann das Fahrzeug wahlweise für 2 bis 4 Personen ausgelegt sein

Die vorderen Kanten der Sitze 42, die in Fig. 1 gezeigt sind und die benachbart zu dem Tisch 50 sind, sind von dem hinteren Ende des Fahrzeuginnenraum ca. 167 cm entfernt. Bei dieser Lage ergibt sich insbesondere bei einem Fahrzeug einer Gesamtlänge von zwischen 4,5 und 5,5 m ein Sitzbereich, der eine für die Nutzer angenehme Größe hat. An den Sitzen 42 ist eine Rückenlehne 44 angeordnet. Und in der Richtung zum Fahrzeugfonds ist dahinter ein Bereich für die Matratzen, Decken und Kissen des Schlafbereichs 60 gezeigt. In dem in Fig. 1 gezeigten Aufbau ist dessen Länge (in Fahrzeuglängsrichtung) ca. 110 cm und somit zu kurz als dass zwei Personen dort angenehm schlafen können. Hieraus ergibt sich die Forderung, dass das Fahrzeug in eine Schlafanordnung umbaubar ist, die in Fig. 2 gezeigt ist. Dort ist die Rückenlehne 44 der Sitze 42 umgeklappt und liegt bspw. auf der Sitzfläche der Sitze 42. Der Liegebereich ist um ein gewisses Stück vertikal höher angeordnet, als die Sitzfläche der Sitze 42. Somit ergibt sich nach dem Umklappen eine horizontale Ebene als Schlaffläche 60, auf der die Matratzen ausgebreitet werden können, wie dies in Fig. 2 gezeigt ist. Die sich so ergebende Länge des Schlafbereichs beträgt knapp 200 cm und ist somit für normal gebaute Personen ausreichend.

Bei dem Umbau des Fahrzeugs in seine Schlafanordnung muss die Nasszelle 20 in ihrer Lage in Fahrzeuglängsrichtung verschoben werden. Dafür ist die Nasszelle 20 auf Schienen gelagert (nicht gezeigt) Es besteht ausschließlich eine Längsführung für die Nasszelle. Die in der Nasszelle vorhandene Toilette kann bevorzugt ein standardmäßig verfügbares Toilettenmodul sein, das einen Container für das Abwasser umfasst. Dieser Container ist Teil der Nasszelle und kann durch eine Öffnung (nicht gezeigt) in der Außenwand des Fahrzeugs von außen entnommen werden. Somit stellt sich noch die Aufgabe der Zufuhr der Nasszelle mit Wasser für ein Waschbecken 21 und ggf. eine Dusche (nicht gezeigt) und mit dem Spülwasser für die Toilette 22. Dafür ist ein Schlauch 25 unterhalb des Bodens der Nasszelle 20 in einem Bogen geführt. Die Lage des Schlauchs 25 ändert sich, wie es im Vergleich der Figuren 1 und 2 sichtbar ist.

Das Toilettenmodul 22 hat eine gewisse Erstreckung in Fahrzeugbreitenrichtung und bei der vorgegebenen Fahrzeuggröße wäre der Sitzbereich mit dem Tisch zu klein, falls, wie es aus dem Stand der Technik bekannt ist, standardmäßig eine Nasszelle mit einer angenehmen Größe vorhanden wäre. Stattdessen ist in Fig. 1 oder 2 gut sichtbar, dass die Tür, bzw. allgemeiner ausgedrückt die Schließvorrichtung 32 unmittelbar neben der Toilette 22 endet. Die Sitzrichtung auf der Toilette ist vorzugsweise in Fahrzeuglängsrichtung. Es ist für den Nutzer der Toilette unangenehm, die Seitenwand bzw. Tür der Nasszelle derart nah bei der Toilette zu haben. Aus diesem Grund besteht die Möglichkeit, die Nasszelle 20 bei Bedarf in Fahrzeug breitenrichtung zu vergrößern.

In Fig. 1 ist die einfachste Variante dieser Vergrößerung dargestellt. Dabei ist ein folienartiges oder textiles Material als Planentür 32 auf einer Trommel 30 aufrollbar und wird federunterstützt auf die Trommel 30 gewickelt. Entgegen dieser Wickelkraft kann der Nutzer das freie Ende nehmen und auf der entgegengesetzten Seite der Türöffnung des Toilettenmoduls einhaken oder klemmen. Dieser Zustand ist in Fig. 1 gezeigt. Aufgrund der Elastizität dieses Materials kann es nachgeben, wenn eine Person die Toilette benutzt. So kann der Körper der Person das genannte Material 32 nach außen auswölben. Eine derartige Auswölbung ist in Fig. 2 gezeigt. Dieser Fall tritt ein, wenn eine Person (nicht gezeigt) auf der Toilette sitzt. Das Auswölben geschieht über einen Kontakt des Körpers der Person, insbesondere dem Hüftbereich und/oder den Schultern bzw. Armen mit der Planentür. Die Tür ist beispielsweise so eingerichtet, dass mindestens eine maximale Auswölbung von 50 mm möglich ist. Bevorzugt sind maximale Aufwölbungen von bis zu 300 cm möglich. Bei der gezeigten Ausführungsform beträgt die maximale Auswölbung mindestens 120 mm. Der Tisch ist in Fig. 2 nicht gezeigt. Er kann in dem Zustand, dass die Toilette benutzt wird oder benutzbar sein soll, entweder abgebaut sein, oder verschoben oder verdreht sein.

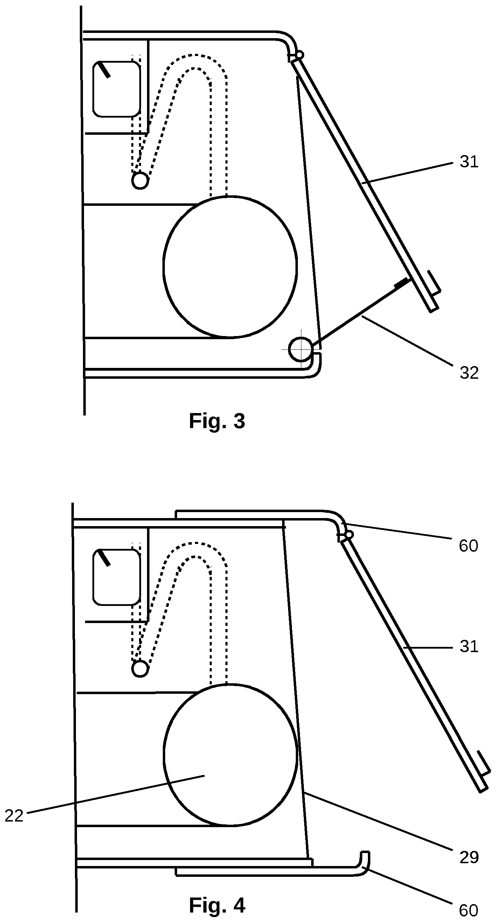

In Fig. 3 ist eine alternative Ausführung gezeigt, bei der eine starre Tür 31 vorgesehen ist, die in der Lage ist, die Nasszelle komplett zu verschließen. Zusätzlich ist eine Planentür, wie sie bereits in Bezug auf Fig. 1 erläutert wurde, vorgesehen und die in die Tür 31 eingehakt werden kann. So wird trotz teilgeöffneter Tür ein blickdichter Schutz des Inneren der Nasszelle 20 sichergestellt. In der Variante der Fig. 4 kommt ebenfalls eine starre Tür 31 zum Einsatz. Zusätzlich ist eine Vorrichtung vorgesehen, mit der es möglich ist, die Tür bzw. Schließvorrichtung in Fahrzeugbreitenrichtung zu verfahren. Dafür ist in Fig. 4 eine doppelte Seitenwand der Nasszelle gezeigt, wobei die vorhandenen beiden Ebenen gegeneinander verschiebbar sind, um so den Innenraum der Nasszelle zu vergrößern.

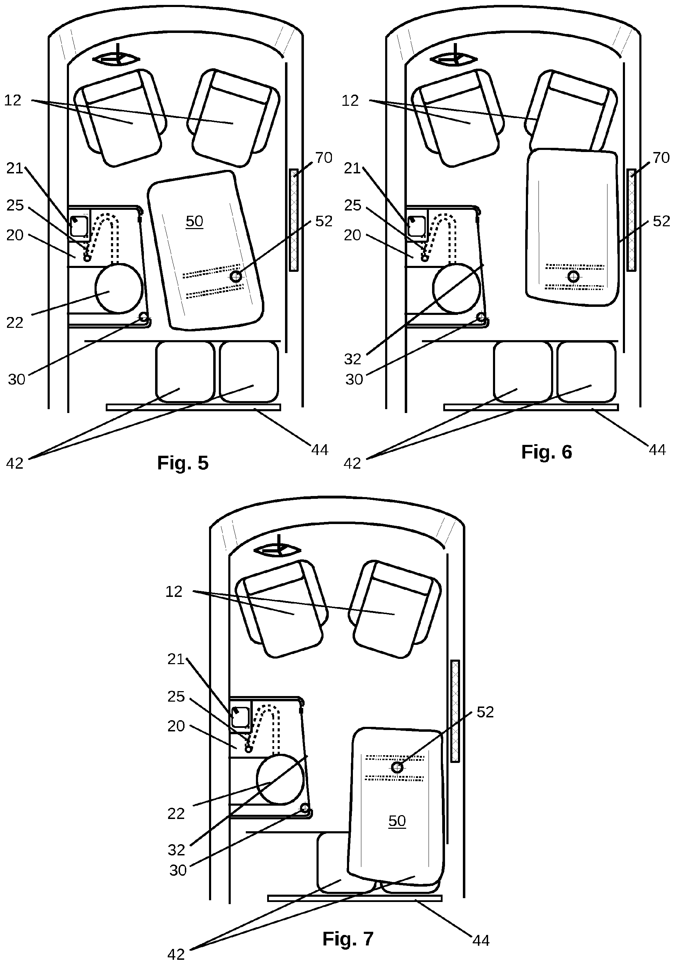

Aus Gründen der Übersichtlichkeit zeigen die Varianten der Anordnung des Tischs gemäß den Figuren 5 bis 7 nur den vorderen und mittleren Teil des Wohnmobils 10. An dem Boden des Wohnmobils ist das Tischbein 52 an einer Stelle lösbar befestigt. Bevorzugt hat der Tisch nur ein Tischbein. An dem oberen Ende des Tischbeins ist ein Schlitten befestigt, der in zwei Richtungen Führungen aufweist, so dass die Tischoberseite in zwei Richtungen relativ zum Tischbein 52 verschoben werden kann. Zudem ist die Tischplatte um die Achse des Tischbeins 52 schwenkbar. Nicht dargestellte Klemmen oder Rastungen sorgen dafür, dass der Tisch an beliebigen Stellen fixiert werden kann. In der Position der Fig. 5 steht der Tisch mittig in der Innenfläche, die durch die Sitze 12 und 42 und die Nasszelle bestimmt ist. Der Tisch ist so ausgerichtet, dass er von allen Sitzen optimal erreicht werden kann. In der Stellung, die in Fig. 6 gezeigt ist, ist der Tisch nah an die Eingangstür 70 geschwenkt und verschoben. So ist der Zugang von den vorderen Sitzen 12 zu dem hinteren Bereich des Fahrzeugs mit den Sitzen 42 optimal. Und die Position des Tischs 50 der Fig. 7 entspricht der Position gemäß Fig. 6, mit dem Unterschied, dass der Tisch maximal nach hinten verschoben ist. In dieser Position ist es nicht mehr möglich, auf den beiden hinteren Sitzen 42 zu sitzen. Statt dessen ist die Eingangstür 70 gut zugänglich, so dass das Fahrzeug in dieser Position gut betreten werden kann. Zudem ist in den Positionen der Figuren 6 und 7 die Toilette gut zugänglich.

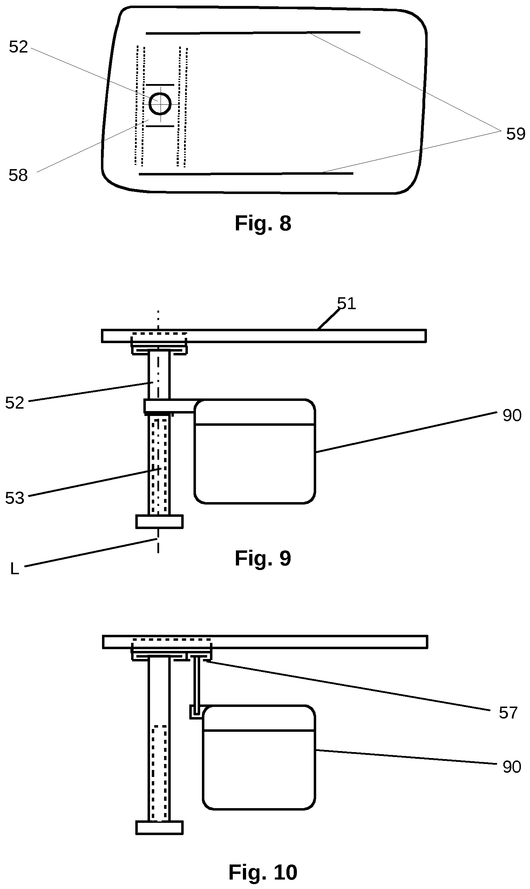

Figur 8 zeigt eine Draufsicht von oben auf den Tisch mit einer Tischplatte 51. Unter der Tischplatte sind zwei Führungen angeordnet. Zunächst eine erste Linearführung 59, die über zwei Führungsprofile verfügt, die in Längsrichtung des Tischs ausgerichtet und voneinander beabstandet sind. In diesen Führungen wird ein Träger geführt, der in Fig. 8 mit jeweils zwei Paaren gestrichelter Linien angedeutet ist. Dieser Träger selbst umfasst eine Linearführung, in der ein weiterer Träger so gelagert ist, dass letzterer in Querrichtung des Tischs verschiebbar ist. Dieser weitere Träger ist mit dem Tischbein drehbar verbunden. Über diese Ausführungsform ist die Tischplatte zweidimensional verschiebbar und zudem drehbar. So ist es möglich, den Tisch so zu positionieren, wie es in den Figuren 5 bis 7 gezeigt ist. Bei einer bevorzugten Ausführungsform ist das Tischbein 52 dauerhaft und nicht entfernbar mit dem Boden des Wohnmobils verbunden.

Zudem kann der Tisch als Träger für eine Box, insbesondere eine Kühlbox 90, verwendet werden. Dabei kann die Kühlbox in einer ersten Variante unmittelbar an der Unterseite der Tischplatte 51 angeordnet sein. Die Lage dieser Befestigung ist so gewählt, dass keine Überschneidung mit den genannten beweglichen Trägern besteht. (Diese Variante ist in den Figuren nicht gezeigt.)

In einer zweiten Variante, gemäß Fig. 9, kann die Kühlbox 90 mit einem Halteprofil verbunden sein, welches bevorzugt drehbar oder alternativ starr an dem Tischbein 52 gelagert ist. Dazu umfasst das Tischbein eine flanschartige Führung, in der ein Lagerring des Halteprofils geführt wird. Bevorzugt wird dabei eine Drehwinkelbegrenzung, wie ein vorstehender Zapfen verwendet, um zu verhindern, dass die Kühlbox um mehr als 360° gedreht werden kann. Denn die Kühlbox ist mit einem elektrischen Anschlusskabel verbunden (nicht gezeigt) und bei zu häufiger Drehung würde das Anschlusskabel mechanisch überlastet.

In einer weiteren Variante, die in Fig. 10 gezeigt ist, kann eine der Führungen der Lagerung der Tischplatte 51 eine Längsführung 57 umfassen, mit der ein Halteprofil der Kühlbox 90 geführt wird. Bevorzugt ist die Führung so eingerichtet, dass sie eine Beweglichkeit in Tischquerrichtung erlaubt. Abhängig von der Winkelausrichtung der Tischplatte (vergleiche Figuren 5 bis 7) kann somit die Kühlbox derart verschoben werden, dass sie für Personen, die am Tisch sitzen, nicht hinderlich ist. Weiter kann an dem Tisch gekocht werden

## Patentansprüche

1. Wohnmobil (10) mit einer im Fahrzeuginneren angeordneten Nasszelle (20), die eine Toilette (22) umfasst und einen in Fahrzeugbreitenrichtung angeordneten schließbaren Zugang aufweist, die eine Schließvorrichtung (30, 32), wie eine Tür und/oder eine spannbare Plane und/oder eine Schiebetür, umfasst und in zwei geschlossene Stellungen bringbar ist, wobei die Nasszelle (20) in den beiden geschlossenen Stellungen eine unterschiedliche Größe aufweist, **dadurch gekennzeichnet, dass** das Wohnmobil (10) in eine Anordnung mit vergrößertem Wohnbereich bringbar ist, die zumindest vier Sitzplätze (12, 42) und einen Tisch (50) umfasst, wobei der Tisch (50) in eine Lage bringbar ist, in welcher er von allen der vier Sitzplätze (12, 42) optimal erreichbar ist und wobei die Nasszelle (20) nicht zugänglich ist, wenn der Tisch sich in dieser Position befindet.

2. Wohnmobil (10) gemäß Anspruch 1, wobei in der ersten geschlossenen Stellung der Zugang zu der Nasszelle plan geschlossen ist und wobei in der zweiten geschlossenen Stellung die Schließvorrichtung zumindest teilweise in das Fahrzeuginnere verlagert ist, dass das Innenvolumen der Nasszelle vergrößert ist.

3. Wohnmobil (10) gemäß Anspruch 1 oder 2, **dadurch gekennzeichnet, dass** die Nasszelle in Fahrzeuglängsrichtung verschiebbar ist, so dass in einer ersten Stellung ein im Fahrzeugfond angeordneter Schlafbereich vergrößert ist und in einer zweiten Stellung der Schlafbereich verkleinert ist und statt dessen ein Wohnbereich vergrößert ist.

4. Wohnmobil (10) gemäß einem der vorangegangenen Ansprüche, **dadurch gekennzeichnet, dass** die Schließvorrichtung eine Trommel (30) umfasst, auf der eine Schließvorrichtung, insbesondere eine Planentür (32), aufrollbar ist.

5. Wohnmobil (10) gemäß einem der vorangegangenen Ansprüche, **dadurch gekennzeichnet, dass** die Toilettensitzrichtung in Fahrzeuglängsrichtung ist und in der ersten geschlossenen Stellung der Abstand von der Toilettenbrille zu der Schließvorrichtung weniger als 15 cm beträgt, bevorzugt weniger als 3 cm beträgt und besonders bevorzugt die Schließvorrichtung unmittelbar der Toilettenbrille benachbart ist.

6. Wohnmobil nach einem der vorhergehenden Ansprüche, **dadurch gekennzeichnet, dass** unter dem Tisch eine oder mehrere Kochvorrichtungen angebracht sind, wobei die eine oder mehreren Kochvorrichtungen relativ zur Tischplatte bewegbar sind.

7. Wohnmobil (10) gemäß einem der vorangegangenen Ansprüche, **dadurch gekennzeichnet, dass** in einer Anordnung mit vergrößertem Wohnbereich ein Tisch (50) in Fahrzeugquerrichtung neben der Nasszelle (20) angeordnet ist oder anordbar ist und zu beiden Seiten des Tisches (50) in Fahrzeuglängsrichtung jeweils zumindest zwei Sitzgelegenheiten (12, 42) angeordnet sind und insbesondere, dass in einer Anordnung mit vergrößertem Wohnbereich der Tisch entweder spaltfrei an die Nasszelle angrenzt oder ein zwischen der Nasszelle und dem Tisch vorhandener Spalt kleiner ist als ein Spalt zwischen einer davon gegenüberliegenden Seite des Tischs bis zu der Innenwand des Wohnmobils (10), die der Nasszelle gegenüberliegt.

8. Wohnmobil (10) gemäß einem der vorangegangenen Ansprüche, **dadurch gekennzeichnet, dass** sowohl in der ersten geschlossenen Stellung wie auch der zweiten geschlossenen Stellung die Schließvorrichtung so eingerichtet ist, dass an der Innenseite der Schließvorrichtung abtropfendes Duschwasser in einen Auffangbereich der Nasszelle gelangt.

9. Wohnmobil (10) gemäß einem der vorangegangenen Ansprüche, **dadurch gekennzeichnet, dass** die Schließvorrichtung eine blick- und wassergeschützte Folie (32) oder Textil aufweist, die zur Vergrößerung des Innenraums der Nasszelle elastisch verformbar ist, und wobei die Folie (32) von einer federelastisch spannbaren Wickelvorrichtung (30) aufwickelbar ist.

10. Verfahren zum Umbau eines Wohnmobils (10) von einer Schlafanordnung in eine Anordnung mit vergrößertem Wohnbereich, wobei ein Teil der Fläche, die bei der Schlafanordnung für eine Matratze verwendet wird, bei der Anordnung mit vergrößertem Wohnbereich mit zumindest einem Sitz (42) belegt wird und wobei für den genannten Umbau eine eine Toilette (22) umfassende Nasszelle (20) entlang der Längsrichtung des Wohnmobils (10) in Richtung des Fahrzeugfonds verschoben wird und ein Tisch (50) in der Anordnung mit vergrößertem Wohnbereich in Fahrzeugbreitenrichtung neben der Nasszelle (20) so angeordnet wird, dass ein Abstand von mindestens 25 cm vom Tisch (50) zu der der Nasszelle (20) gegenüberliegenden Innenwand des Wohnmobils (10) oder einer Tür des Wohnmobils besteht.

## Claims

1. A motor home (10) with a wet room (20), including a toilet (22), arranged in the vehicle interior, and a closable access arranged in the transverse direction of the vehicle, which comprises a closing device (30, 32), such as a door and/or a stretchable tarpaulin and/or a sliding door and can be brought into two closed positions, wherein in both closed positions the wet room (20) is of a different size, **characterised in that** the motor home (10) can be made into an configuration having an enlarged living area comprising at least four seats (12, 42) and a table (50), wherein the table (50) can be brought into a position in which it can be optimally reached from all four seats (12, 42) and wherein the wet room (20) is not accessible when the table is in this position.

2. The motor home (10) according to claim 1, wherein in the first closed position the access to the wet room is closed flat and wherein in the second closed position the closing device is displaced at least partially into the interior of the vehicle so that the inner volume of the wet room is enlarged.

3. The motor home (10) according to claim 1 or 2, **characterised in that** the wet room is displaceable in the longitudinal direction of the vehicle so that in a first position a sleeping area arranged in the rear of the vehicle is enlarged and in a second position the sleeping area is made smaller and the living area is enlarged instead.

4. The motor home (10) according to any one of the preceding claims, **characterised in that** the closing device comprises a drum (30) onto which a closing device, in particular a tarpaulin door (32) can be rolled up.

5. The motor home (10) according to any one of the preceding claims, **characterised in that** the toilet seating direction is in the longitudinal direction of the vehicle and in the first closed position the distance from the toilet seat to the closing device is less than 15 cm, preferably less than 3 cm, and particularly preferably the closing device is immediately adjacent to the toilet seat.

6. The motor home according to any one of the preceding claims, **characterised in that** one or more cooking devices are arranged under the table, wherein the one or more cooking devices can be moved relative to the table top.

7. The motor home (10) according to any one of the preceding claims, **characterised in that** in a configuration with an enlarged living area a table (50) is arranged or can be arranged next to the wet room (20) in the transverse direction of the vehicle, and on each of both sides of the table (50) in the longitudinal direction of the vehicle at least two seats (12, 42) are arranged and, in particular, **in that** in a configuration with an enlarged living area the table either adjoins the wet room without a gap or a gap present between the wet room and the table is smaller than a gap between an opposite side of the table and the inner wall of the motor home (10) opposite the wet room.

8. The motor home (10) according to any one of the preceding claims, **characterised in that** both in the first closed position as well as also in the second closed position the closing device is designed in such a way that on the inside of the closing device dripping shower water ends up in a collection area of the wet room.

9. The motor home (10) according to any one of the preceding claims, **characterised in that** the closing device comprises a viewing and water-proof film (32) or textile which is elastically deformable to increase the inner spacer of the wet room and wherein the film (32) can be rolled up by a elastically-sprung winding device (30) .

10. A method of converting a motor home (10) from a sleeping configuration into a configuration with an enlarged living area, wherein part of the area, which in the case of the sleeping configuration is used for a mattress, in the configuration with an enlarged living area is occupied by at least one seat (42) and wherein for said conversion, a wet room (20) including a toilet (22) is displaced along the longitudinal direction of the motor home (10) in the direction of the rear of the vehicle and, in the configuration with an enlarged living area, a table (50) is arranged in the transverse direction of the vehicle next to the wet room (20) in such a way that there is a distance of at least 25 cm from the table (50) to the inner wall of the motor home (10) opposite the wet room (20), or a door of the motor home.

## Revendications

1. Camping-car (ou autocaravane) (10) avec un compartiment sanitaire (20) disposé à l'intérieur du véhicule, qui comprend des toilettes (22) et comporte un accès fermable disposé dans le sens de la largeur du véhicule, qui comprend un dispositif de fermeture (30, 32), comme une porte et/ou une bâche pouvant être tendue et/ou une porte coulissante et peut être mis dans deux positions fermées, sachant que le compartiment sanitaire (20) comporte une taille différente dans les deux positions fermées, **caractérisé en ce que** le camping-car (10) peut être placé dans une disposition avec un habitacle agrandi, qui comprend au moins quatre places assises (12, 42) et une table (50), sachant que la table (50) peut être mise dans une position dans laquelle elle peut être accessible de faon optimale depuis les quatre places assises (12, 42) et sachant que le compartiment sanitaire (20) n'est pas accessible lorsque la table se trouve dans cette position.

2. Camping-car (10) selon la revendication 1, **caractérisé en ce que** dans la première position fermée l'accès au compartiment sanitaire est fermé de façon plane et sachant que dans la deuxième position fermée le dispositif de fermeture est logé au moins en partie à l'intérieur du véhicule de sorte que le volume intérieur du compartiment sanitaire est agrandi.

3. Camping-car (10) selon la revendication 1 ou 2, **caractérisé en ce que** le compartiment sanitaire peut être déplacé dans la direction longitudinale du véhicule de telle manière que dans une première position, un espace de sommeil disposé au fond du véhicule est agrandi et dans une deuxième position, l'espace de sommeil est réduit et à la place de quoi un habitacle est agrandi.

4. Camping-car (10) selon l'une quelconque des revendications précédentes, **caractérisé en ce que** le dispositif de fermeture comprend un tambour (30) sur lequel un dispositif de fermeture peut être enroulé, en particulier une porte à bâche (32).

5. Camping-car (10) selon l'une quelconque des revendications précédentes, **caractérisé en ce que** le sens d'assise des toilettes se situe dans la direction longitudinale du véhicule et dans la première position fermé, l'intervalle allant de la lunette des toilettes au dispositif de fermeture est inférieur à 15 cm, de préférence inférieur à 3 cm et le dispositif de fermeture est en particulier de préférence directement voisin de la lunette des toilettes.

6. Camping-car selon l'une quelconque des revendications précédentes, **caractérisé en ce qu'**un ou plusieurs dispositifs de cuisson sont disposés sous la table, sachant qu'un ou plusieurs dispositifs de cuisson peuvent être déplacés par rapport au dessus de table.

7. Camping-car (10) selon l'une quelconque des revendications précédentes, **caractérisé en ce que** dans une disposition avec l'habitacle agrandi, une table (50) est disposée ou peut être disposée dans le sens transversal du véhicule près du compartiment sanitaire (20) et au moins deux possibilités de siège (12, 42) sont respectivement disposées des deux côtés de la table (50) dans la direction longitudinale du véhicule et en particulier, **en ce que** dans une disposition avec habitacle agrandi, la table est soit limitrophe au compartiment sanitaire sans intervalle, soit un intervalle existant entre le compartiment sanitaire et la table est plus petit qu'un intervalle situé entre un côté de la table opposé à celui-ci et la paroi intérieure du camping-car (10), qui est opposée au compartiment sanitaire.

8. Camping-car (10) selon l'une quelconque des revendications précédentes, **caractérisé en ce que** tant dans la première position fermée que dans la deuxième position fermée, le dispositif de fermeture est agencé de telle sorte que l'eau de douche s'égouttant du côté intérieur du dispositif de fermeture parvient dans une zone de réception du compartiment sanitaire.

9. Camping-car (10) selon l'une quelconque des revendications précédentes, **caractérisé en ce que** le dispositif de fermeture comporte un film (32) ou un textile protégeant des regards et de l'eau, qui peut être élastiquement déformé pour agrandir l'espace intérieur du compartiment sanitaire et sachant que le film (32) peut être enroulé par un dispositif d'enroulement (30) pouvant être tendu élastiquement par ressort.

10. Procédé destiné à transformer un camping-car (10) d'un aménagement de sommeil dans une disposition présentant un habitacle agrandi, sachant qu'une partie de la surface qui est utilisée lors de l'aménagement de sommeil pour un matelas, est occupé au moins par un siège (42) avec la disposition d'un habitacle agrandi et sachant que pour ladite transformation, un compartiment sanitaire (20) comprenant des toilettes (22) est déplacé le long du sens longitudinal du camping-car (10) en direction du fond du véhicule et une table (50) est disposée dans la disposition avec l'habitacle agrandi dans le sens de la largeur du véhicule près du compartiment sanitaire (20) de telle manière qu'il existe une distance d'au moins 25 cm de la table (50) à la paroi intérieur du camping-car (10) opposée au compartiment sanitaire (20) ou à une porte du camping-car.
